# EUROPÄISCHE PATENTANMELDUNG

(11) **EP 1 391 659 A1**
(43) Veröffentlichungstag der Anmeldung: **25.02.2004**
(21) Anmeldenummer: 03000990.6
(22) Anmeldetag: 17.01.2003
(51) Int. Cl.: F24D 3/16

(54) **Wärmetauscher mit ebenen, spiralförmigem Rohrregister**

(30) Priorität: 21.08.2002 DE 10238085
(71) Anmelder: gabo Systemtechnik GmbH, 94559 Niederwinkling (DE)
(72) Erfinder: Bauer, Peter, 94357 Konzell (DE); Buchner, Peter, 94327 Bogen (DE); Wöhrl, Helmut, 94327 Bogen (DE)

(57) **Zusammenfassung**

Die Erfindung betrifft ein in einer Ebene E1, parallel auf einer an die Raumluft grenzenden Platte P oder dergl., schneckenförmig verlegtes, von einem Temperiermedium durchflossenes Wärmetauscher-Rohrregister WP, vorzugsweise für Heiz- und Kühldecken KHD mit Vor- und Rücklaufleitungen AL1,AL2, wobei eine der Vor- bzw. Rücklaufleitungen AL1 in der Ebene E1 der Wärmetauscher-Rohrregister WP verlegt und die andere AL2 aus dem Zentrum der Schnecke S, d.h. der Ebene E1 in eine darüberliegende Ebene E2 herausgeführt ist.

## Beschreibung

Die Erfindung betrifft ein Wärmetauscher-Rohrregister für einen in einer Ebene E1, parallel auf einer an die Raumluft grenzenden Platte P oder dergl., in Form einer Schneckeverlegten, von einem Temperiermedium durchflossenen Wärmetauscher, WP, vorzugsweise für Heiz- und Kühldecken (KHD) mit Vor- und Rücklaufleitungen (AL1,AL2).

Wärmetauscher-Rohrregister dienen insbesondere zu Temperierung von Hotel-, Büro-, Verwaltungs-, Laborgebäuden usw. und werden oft nachträglich als sogen. "abgehängte Decken" in den Gebäuden montiert. Dabei kommen meist vorgefertigte von einem Temperiermediuim durchflossene Rohrregister als Wärmetauscher zum Einsatz, die auf den Platten solcher abgehängter Decken montiert sind und herkömmliche Klimaanlagen ersetzen, wodurch die bekannten Nachteile dieser durch temperierten Luftaustausch wirkenden Anlagen vermieden werden.

Solche vorgefertigte Wärmetauscher in der Art von fertig verlegten Rohrregistern sind an sich notorisch bekannt. Diese werden, meist in Schnecken- oder Mäanderform auf Platten, z.B. bei Decken- oder Wandtemperierung verlegt, wobei die Anschlussleitungen für die Ver- und Entsorgung des Wärmetauschers in einer Ebene verlegt sind. Schneckenförmig verlegte Wärmetauscher sind regelmäßig so ausgebildet, daß die Zulaufleitung (Vorlaufrohr) spiralförmig bis in das Zentrum der Schnecke geführt ist, dort in einer Umkehrschleife als Rücklauf zwischen den jeweiligen Vorlaufrohren wieder nach außen verläuft. Bei einer solchen Verlegeart geht, wegen der relativ großen Biegeradien der Rohre und folglich einer geringen Verlegedichte, viel Platz verloren, was die Temperierleistung eines solchen Wärmetauschers sehr einschränkt. Ähnliches gilt, wie beispielsweise aus der DE 35 13 971 A1 ersichtlich, bei der Verlegung eines Wärmetauscher-Rohrregisters in Mäanderform bei dem die Abstände zwischen den parallel gegenläufigen Rohrabschnitten, die durch die großen Biegeradien derselben bedingt sind, also zu groß sind, um eine ausreichende Temperierleistung des Wärmetauschers zu erzielen. Die zur Verfügung stehende Fläche ist somit nur unzureichend ausgenutzt. So auch ZS "Business Magazin" Heft Sept. 1999 (International Business Verlag GmbH, Rheine).

Der Erfindung, wie sie in den Ansprüchen beschrieben ist, liegt daher die Aufgabe zugrunde, ein vorfertigbares Wärmetauscher-Rohrregister zu schaffen, das die Nachteile der bekannten Wärmetauscher nicht aufweist und dessen Temperierleistung / qm gegenüber diesen bekannten Wärmetauschern erhöht ist.

Mit der Erfindung erzielte Vorteile sind insbesondere die verbesserte Ausnutzung der zur Verfügung stehenden Fläche mittels einer dichten Rohranordnung im Bereich der Schnecke mit einem Abstand zwischen den Rohrabschnitten von etwa einem Rohrdurchmesser, einer erhöhten Temperierleistung / qm und einer vereinfachten Montage. Ein zusätzlicher Vorteil besteht im Wegfall einer Umkehrschleife im Zentrum der Schnecke, da der Rücklauf (oder Vorlauf) aus dem Zentrum der Schnecke heraus in eine zweite Ebene geführt ist und die Schneckengänge auf der der Platte abgewandten Seite überquert.

Die Erfindung ist nachstehend anhand eines in den Abbildungen dargestellten Ausführungsbeispielses näher erläutert.

Es zeigt:
- Fig. 1: eine Draufsicht auf eine Platte mit einem darauf angeordneten Wärmetauscher Rohrregister in Schneckenfom und
- Fig. 2: eine Ausführungsvariante der Fig. 1, ebenfalls in Draufsicht.

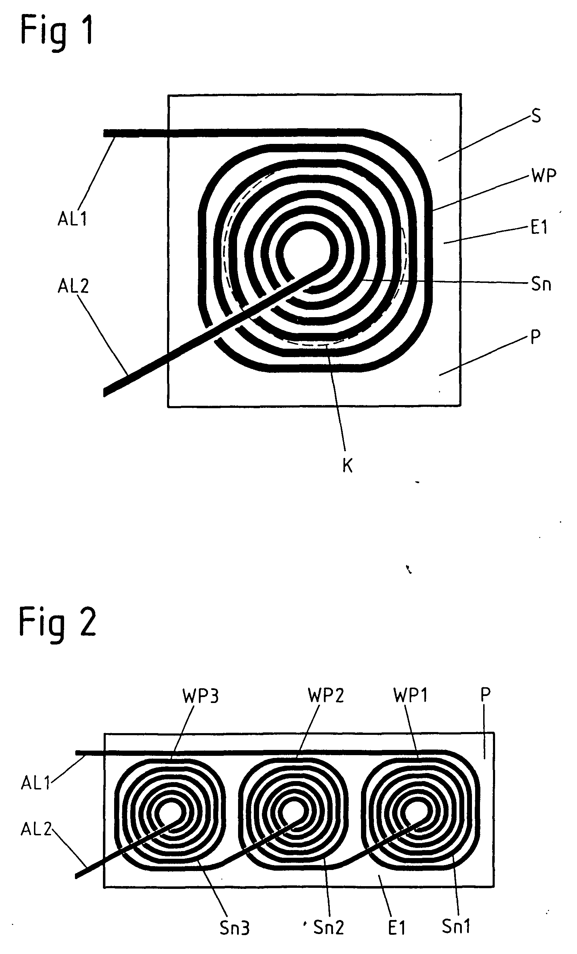

Der in der Figur 1 dargestellte Wärmetauscher WP ist auf einer Platte P, beispielsweise Teil einer sogen. abgehängten Decke, in Form einer Schnecke S angeordnet, wobei das Rohr so eng gewickelt ist, daß die Abstände von Schneckengang zu Schneckengang Sn nur etwa einen Rohrdurchmesser betragen und der Zu- bzw. Rücklauf, d.h. die Zuflußleitung AL1 in der Ebene E1, also der Ebene in der der Wärmetauscher WP angeordnet ist, erfolgt, während die Abflußleitung AL2 aus dem Zentrum der Schnecke S herausgeführt und in einer Ebene E2 die Schneckengänge Sn zum Rand der Platte P hin überquert. Es ist dabei unerheblich, ob der Zulauf des Temperiermediums über AL1 und der Rücklauf über AL2 erfolgt oder umgekehrt.

Die Schneckengänge Sn der Schnecke S sind vorzugsweise so gewickelt, daß die inneren Schneckengänge sich innerhalb eines Kreises K befinden, während die äußeren Schneckengänge sich einem, den Kreis umschließenden Quadrat annähern.

Die Figur 2 zeigt eine Ausführungsvariante der Figur 1, eine Wärmetauscheranordnung bei der mehrere Wärmetauscher WP in einer Ebene E1 auf beispielsweise einer Platte P hintereinander geschaltet sind. Bei einer solchen Anordnung erfolgt der Zulauf über den Vorlauf AL1 zum Wärmetauscher WP1, aus dessen Zentrum heraus in die Ebene E2 und, die Schneckengänge Sn1 überquerend, wieder in die Ebene E1 zurück, wo der Wärmetauscher WP2 angeströmt wird und von dessen Zentrum wieder heraus in die Ebene E2 und über die Schneckengänge Sn2 in die Ebene E1 zurück, um in den Wärmetauscher WP3 einzumünden. Aus dessen Zentrum führt dann die Leitung als Rücklauf AL2 wieder in der Ebene E2 über die Schneckengänge Sn3 als Rücklauf der gesamten Wärmetauscheranordnung WP1, WP2, WP3 nach außen.

Die aus dem Zentrum der Wärmetauscher-Register WP herausgeführten Leitungen sind dabei stets auf der der Raumluft abgewandten Seite der Platte P angeordnet. Die Platte P kann vorteilhafterweise aus schall- und/oder wärmedämmenden Werkstoff vorgefertigt und bereits mit Rillen für den einfachen Einbau des Wärmetauschers WP mit seinen Schneckengängen Sn versehen sein. Die Rohrleitungen des Wärmetauscher-Registers können vorteilhafterweise am Boden abgeflacht und/oder an den Seiten konturiert sein.

Selbstverständlich ist das erfindungsgemäß vorgeschlagene Wärmetauscher-Rohrregister nicht auf den Einsatz in Hotel-, Büro- und Verwaltungsgebäuden beschränkt, sondern kann überall dort mit Vorteil angewandt werden, wo auf kleinen Flächen große Kühl- bzw. Heizleistungen erzielt werden müssen. Auch dort, wo die Biegeradien von Rohren beschränkt sind und nur kleine Flächen zur Verfügung stehen kann die Erfindung mit Vorteil eingesetzt werden.

### Bezugszeichenliste

- WP: Wärmetauscher
- KHD: Kühl-Heiz-Decke
- P: Platte auf bzw. in der WP verlegt ist
- E1: Verlegeebene für WP, identisch mit Oberseite von P
- E2: Ebene oberhalb von E1 auf der der Platte P abgewandten Seite
- AL1,AL2: Vor- und Rücklaufleitungen
- S: Schneckenform von WP
- Sn: Schneckengänge
- K: Kreiskontur

## Patentansprüche

1. Wärmetauscher-Rohrregister für einen in einer Ebene (E1), parallel auf einer an die Raumluft grenzenden Platte (P) oder dergl., in Form einer Schnecke (S) verlegten, von einem Temperiermedium durchflossenen Wärmetauscher (WP), vorzugsweise für Heiz- und Kühldecken (KHD) mit Vor- und Rücklaufleitungen (AL1,AL2), **dadurch gekennzeichnet, daß** eine der Vor-/Rücklaufleitungen (AL1) in der Ebene (E1) des Wärmetauschers (WP) verlegt das Rohrregister anströmt und die andere (AL2) aus dem Zentrum der Schnecke (S) in der Ebene (E1), in eine Ebene (E2) herausgeführt ist und die Schneckengänge (Sn) der Schnecke (S) zum Rand der Platte (P) in dieser Ebene (E2) hin überquert, wobei die Ebene (E2) sich auf der der Platte (P) abgewandten Seite befindet.

2. Wärmetauscher-Rohrregister nach Anspruch 1und 2, **dadurch gekennzeichnet, daß** mindestens zwei Wärmetauscher (WP) in einer Ebene (E1) hintereinander geschaltet sind, wobei die Verbindung zum jeweils nächsten Wärmetauschern über die aus dem Zentrum der Schnecke (S) herausgeführten Leitung (AL2) erfolgt, während die in der Ebene (E1) verlegte Leitung (AL1) in die Schneckengänge (Sn) des ersten Wärmetauschers (WP1) einmündet.

3. Wärmetauscher-Rohrregister nach Anspruch 1 und einen der folgenden, **dadurch gekennzeichnet, daß** die Verlegung des Wärmetauschers (WP) in einer vorgefertigten Montageplatte (P) mit eingeformten Rillen für die Aufnahme des Wärmetauschers (WP) erfolgt, wobei die Montageplatte (P) aus wärmeund/oder schalldämmenden Werkstoff besteht.

4. Wärmetauscher-Rohrregister nach Anspruch 1 und einen der folgenden, **dadurch gekennzeichnet, daß** die Schneckengänge (Sn) der Schnecke (S) des Wärmetauschers (WP) eng bei einander liegen, wobei die Schneckengänge (Sn) innen etwa die Kontur eines Kreises (K) aufweisen und außerhalb dieses Kreises (K) sich einem Quadrat annähern, das den Kreis umschließt.

5. Wärmetauscher-Rohrregister nach Anspruch 1 und einen der folgenden, **dadurch gekennzeichnet, daß** das Rohrprofil des Wärmetauschers (WP) auf der Platte (P) abgeflacht oder leicht nach innen gewölbt ist.
